# EUROPEAN PATENT SPECIFICATION

(11) **EP 3 120 971 B1**
(45) Date of publication and mention of the grant of the patent: **16.09.2020**
(21) Application number: 15178305.7
(22) Date of filing: 24.07.2015
(51) Int. Cl.: B32B 17/10, B32B 38/18, B24B 41/053, B24B 9/10, B24B 7/24, B24B 55/06, B24B 55/04, B32B 38/10

(54) **DEVICE AND METHOD FOR REMOVING A PLASTIC FILM LAYER FROM A GLASS PANEL**
VORRICHTUNG UND VERFAHREN ZUM ENTFERNEN EINER KUNSTSTOFFFOLIENSCHICHT VON EINER GLASSCHEIBE
DISPOSITIF ET PROCÉDÉ POUR RETIRER UNE COUCHE DE FILM PLASTIQUE À PARTIR D'UN PANNEAU DE VERRE

(43) Date of publication of application: 25.01.2017
(73) Proprietor: Turomas SL, 44415 Rubielos de Mora Teruel (ES)
(72) Inventor: Martín, Miguel Tomás, ES-44415 Teruel (ES)
(74) Representative: Nederlandsch Octrooibureau

(56) References cited:
- EP-A2- 2 206 581
- WO-A1-2008/107087
- WO-A1-2015/054707
- CN-U- 203 792 127
- KR-A- 20150 007 095
- US-A1- 2008 289 763
- US-A1- 2015 027 284

## Description

### Field of the invention

The present invention relates to a device and method for removing a plastic film layer and/or a low emission layer of a glass panel, as known from EP 2 206 581 A2, which is the basis for the preamble of claims 1 and 12.

### Back ground of the invention

From the current state of the art, trimming devices, stripping devices, removing devices etcetera are known with heads capable of removing a low emission layer from the surface of a glass panel, using a standardized device of a brush type tool.

From WO2008/107087, an edge trimming device is known, comprising an abrasive tool which is provided for removal of a portion of a low emission layer from a glass panel. The abrasive tool comprises a number of steel bristles forming a brush-shaped tool rotatably driven by an electric motor. The brush-shaped tool is provided inside a chuck and a ring to prevent dispersion of the abrasive dust particles into the environment. During operation, the ring lies on the surface of the glass panel defining a vacuum chamber, which withholds the abrasion dust particles that are evacuated through a pipe. The pipe is provided in a middle cavity inside the brush-shaped tool. In this manner, the abrasion dust particles are evacuated via an external pipe to a suction device.

A disadvantage of using this type of edge trimming device is that the user will still need to perform some manual cleaning of the glass panel surface. Moreover, when the glass panel comprises a protective film layer, this type of edge trimming device will not function properly, because the brush will not cut and/or remove the part of the protective film layer in a clean and effective manner. Instead, the use of a brush-shaped tool will make the edges of the protective film layer to become damaged with lots of dents along the side edges, leaving parts of the surface of the low emission glass uncovered. This will create a high risk of deterioration of the low emission layer on the low emission glass. Additionally, such operations will become time consuming and will delay the entire trimming process.

In the known trimming device, if the ring is not properly aligned when it lies on the surface of the glass panel, the vacuum and the entire aspiration operation would fail. Besides, the configuration of the pipe being provided inside a cavity will make the vacuum operation to absorb only the abrasion dust particles that are sucked in the middle cavity provided inside the brush-shaped tool, while the abrasion dust particles retained in-between the steel bristles forming a brush-shaped tool or outside these bristles will not be absorbed and evacuated. Thus, the user will need to stop the process for cleaning the cut surfaces after the trimming operation has been performed. Additionally, known solutions also involve a considerable amount of downtime, while failing to provide a high degree of security, particularly in terms of ensuring the safety of the user or operator. At the same time, the known solutions will fail to provide a consistent quality of the finished product.

It should be noted that when glass panels comprise a low emission layer, it is necessary to firstly remove the low emission layer by following the trajectory of the future cut. However, when the low emission layer comprises an additional protective plastic film layer which is provided on top of low emission layer for protecting the low emission layer, it is necessary to take extra measures to provide a system that is able to remove safely the plastic film layer. When the plastic film layer is detached from the surface of the low emission layer, the low emission layer would become unprotected, creating a situation where the low emission layer can be easily damaged or become oxidised.

It is an object of the present invention to provide a device for removing a plastic film layer and/or the low emission layer from a glass panel, which can overcome at least one of the above-mentioned drawbacks.

### Summary of the invention

To this end, the present invention provides a device as defined by appended claim 1.

Advantageously, this provides a system wherein the residues that are originated when removing the plastic film layer and/or the low emission layer are all absorbed by the aspiration device such that the user does not need to stop the device between removing operations. Moreover, this device provides the possibility to have a continuous flow of glass panels mounted and ready for operation, because after performing the removing operation, the surfaces of the glass panel will be substantially cleaned. This minimizes the amount of downtime between removing operations.

Moreover, the cover element has a concave shape enclosing the volume, with a lower circumference of the concave shape being provided at a vertical distance D from the upper surface of the glass panel.

In this manner, the collecting particles stripped off the plastic film layer and/or a low emission will be confined in the volume and will not go beyond the lower circumference of the cover element. Thus, all the particles will be within the scope of absorption of the aspiration device, and more precisely, of the cover element.

It should be noted that, the vertical distance D is about 0.1-2 cm, preferably about 0.2-1 cm, and more preferably about 0.4-0.8 cm.

By having a small distance between the glass panel and the cover element enclosing the stripping volume, the minimal distance D allows to easily create a vacuum effect in said stripping volume, making all the particles to move towards the interior of the volume. At the same time, since the distance D is always above the upper surface of the glass panel, damage of the glass panel and of the plastic film layer and/or a low emission layer is avoided.

In an embodiment of the invention, the vertical distance D can be adjusted by a linear actuator connected to an upper end of the cover element.

Advantageously, this provides flexibility to the device because the vertical adjustment along the axis Y of the cover element can be done independently from the vertical adjustment, along the same vertical axis Y, of the stripping member.

In an embodiment, the aspiration device is provided with an aspiration tube being fluidly connected to the stripping volume for discharging the particles stripped off the plastic film layer and/or a low emission layer.

This provides a simple evacuation system for the particles. Additionally, the stripping volume is constantly clean and there are not interferences of possible particles with the stripping member.

Moreover, the aspiration device comprises a collector member being connected to the aspiration tube for depositing the stripped-off particles of the plastic film layer and/or a low emission layer.

In this manner, the particles are collected in a colleting pint making the cleaning of the device very quick an efficient, since all the particles are accumulated in a single place, and this storage part will only need to be disconnected from its connected position, emptied and being placed back into the collector member.

Additionally, the collector member comprises a storage part for collecting parts of the plastic film layer and/or a low emission layer, and an air exhaust part for exhausting air.

By having the collector member being divided into the storage part and the air exhaust part, the aspiration system, and more specially the ventilator will not lose its power at any stage of the process. When the storage part is positioned at a different location than the exhaust part, the aspiration power of the ventilator remain intact. In this manner, the vacuum effect provided within the stripping volume remains during the entire removing operation.

In an embodiment of the present invention, the aspiration device comprises a centrifugal pressure fan or a pressure blower or a suction blower to create the vacuum effect inside the stripping volume.

By having the aspiration device comprising any of these possibilities to create the vacuum effect inside the stripping volume, the absorption time of the particles will be reduced, making this process more effective time-wise. Moreover, the flow provided will be steady and will be retain within the cover element.

In an embodiment, the stripping member comprises a grinding wheel being rotatably arranged around a wheel rotation axis perpendicular to the stripping direction and parallel to the upper surface of the glass panel.

By using a gridding wheel, a smooth regular edge performs the striping operation of the plastic film layer and/or a low emission layer in a very uniform manner, Moreover, the use of such a wheel provides the possibility to produce a relatively constant pressure of the wheel on the plastic film layer and/or a low emission layer during the entire grinding process.
It should be noted that, the grinding wheel has an outer diameter of at least 100 mm, and a total thickness of about 10-50 mm. Additionally, the grinding wheel comprises an abrasive material having a fine or ultra-fine grain size of at least 100 µm in grain diameter.

By having a grinding wheel with such specifications, the both the film layer and a low emission layer can be removed without scratching the glass surface.

Another aspect of the present invention relates to a method for removing a plastic film layer and/or a low emission layer from a glass panel, using a device according any of the claims 1- 11, the method being defined by the appended claim 12.

This method provides a simple and time-efficient manner of removing the plastic film layer and/or a low emission layer from low emission glass panels, without the need of a person to perform any manual operations, besides providing the glass panel on the supporting means in a substantially horizontal orientation. It should be noted that this method achieves the objective to lift the plastic film layer in a position along the stripping volume, avoiding having the plastic film layer being lifted at any other point of the surface of the glass panel. Moreover, this method provides substantial vacuum effect within the cover element to avoid the plastic film layer to be lifted in critical part of the glass panel, such as those critical parts that may have sharp edges between intersections or the like. By using this method to remove the plastic film layer and/or a low emission layer, an excellent quality of the stripping operation is achieved.

Moreover, when performing steps c) and/or d) the stripping member is stripping the plastic film layer and/or a low emission layer along a predetermined linear stripping line in a stripping direction S, up to a location adjacent to a first end of a predetermined linear stripping line, and wherein the stripping member is stripping the plastic film layer and/or a low emission layer in a direction opposite to the stripping direction S, along the predetermined linear stripping line up to a location adjacent to a second end of the predetermined linear stripping line.

In an embodiment, the distance B is a predetermined distance of about 0-20 cm from the first end of the predetermined linear stripping line.

By starting the stripping operation at a location adjacent to a first end of a predetermined linear stripping line, this ensure that the stripping member starts the removing of the plastic film layer and/or a low emission layer at a position wherein there is plastic film layer all around. By having plastic film layer all around the stripping member, it is avoided to start the stripping operation at intersections, which are critical points in which there is a high risk having unwilling lifted parts.

Additionally, when performing the steps c) and/or d) cover element is at a vertical distance D from the upper surface (6) of the glass panel (4) of about 0.1-2 cm.

### Brief description of the drawings

Further characteristics and advantages of the invention will become better apparent from the description of preferred embodiments of devices for removing a plastic film layer and/or a low emission glass panels, illustrated by way of non-limiting example in the accompanying drawings, wherein:
Figure 1 is a perspective view of the device mounted on a cutting table according to the invention;
Figure 2 is a detailed view of the device mounted on the cutting table according to the present invention;
Figure 3 shows a front view of the device according to the present invention; and
Figure 4 shows a perspective view of the device according to the present invention.

### Detailed description of the invention

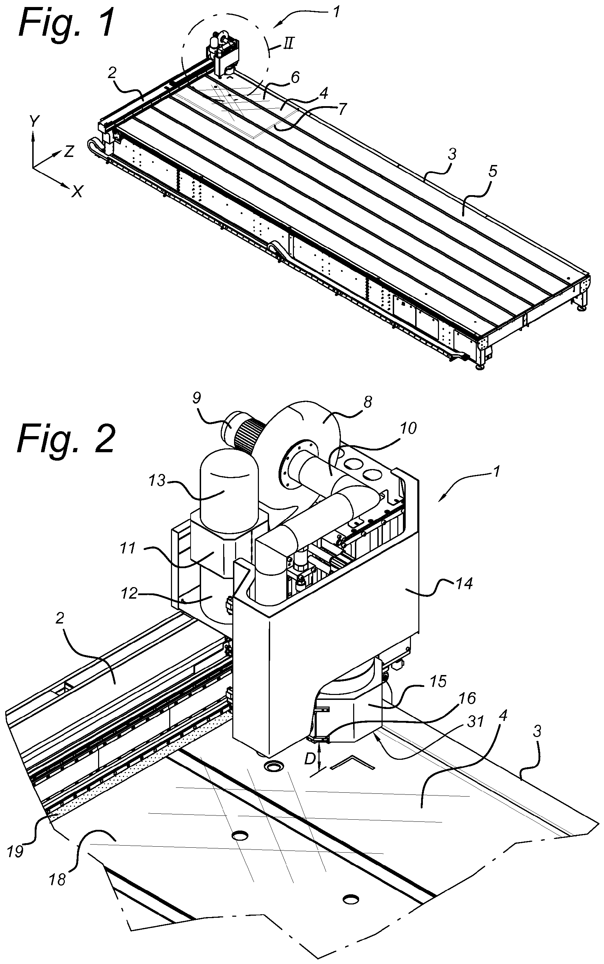

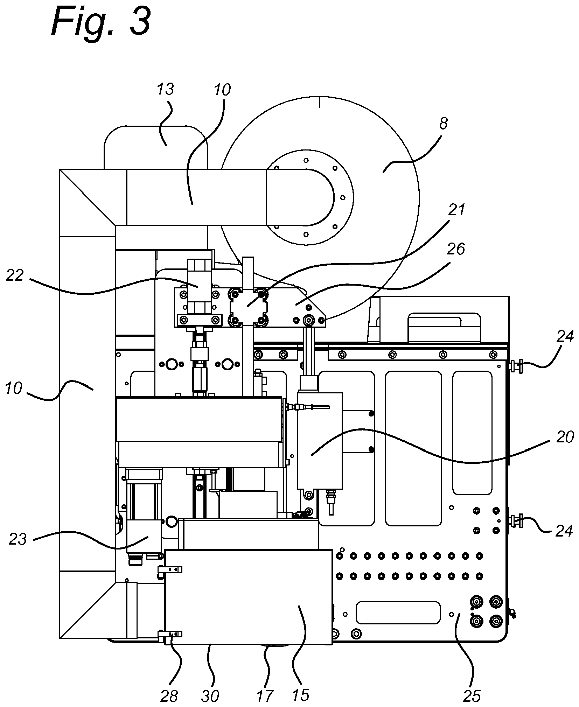

Figure 1 shows a glass panel 4 that is to be processed by a device according to the present invention. The device 1 is preferably specifically designed for removing a plastic film layer 18 and/or a low emission layer 19 provided on the glass panel 4 for use on a cutting table 3. The device, which can be best seen in figures 2 & 3, is mounted in a positioning bridge 2 and it is installed in the cutting table 3. The cutting table 3 comprises a supporting means having a support surface 5 for supporting the glass panel 4 in a horizontal orientation as to be treated. The glass panel 4 comprises an upper and lower surface 6, 7, the lower surface 7 of the glass panel 4 being in contact with the support surface 5. The upper surface 6 of the glass panel 4 is positioned at a vertical distance from the positioning bridge 2 and the stripping device 1.

The device comprises a stripping device 1, which is mounted in the positioning bridge 2. The positioning bridge 2 has a horizontally portion (i.e. extending in a direction perpendicular to the plane defined by the X- and Y-axes) arranged at a vertical distance from the support surface 5, and also from the top surface 6 of the glass panel 4, when the glass panel 4 is in a position for performing the removing operation of the plastic film layer 18 and/or a low emission layer 19 provided onto the upper surface 6 of the glass panel 4. The stripping device 1 is moveable along the positioning bridge 2 in such a way that the stripping device 1 can be positioned at any position over the glass panel 4 and/or the support surface 5 of the cutting table 3.

As shown in figure 1, the stripping device 1 comprises a cover plate 14 protecting the parts of the device from being damage by any particle of residues generated when the device is in full operational mode. The cover plate 14 can be hingeably, clampably or slideably connected to the front part of the device.

The skilled person will appreciate that the glass panel 4 is a low emission glass panel that comprises a low-emission film, which can be in the form of a coating(s). The low emission layer 19 has been developed to minimize the amount of ultraviolet and infrared light that can pass through glass without compromising the amount of visible light that is transmitted. The low-emission film 19 is subject to oxidation when touched by a bear hand or in contact with other material. Moreover, this film or coating(s) can be subject to damaged if not handle with care.

As can be seen more clearly in figure 2, the stripping device 1 comprises a ventilator or aspiration device 8 having a driving motor 9 provided at one side of the internal turbines (not illustrated), and an aspiration tube 10 at the opposite side of the internal turbines. The ventilator 8 is connected to a collector member 11, which is connected to the ventilator 8 by means of an air exit. The collector member 11 comprises a lower and a top element 12, 13. The top element 13 is an exhaust element that allows the air to exit through it, while the lower element 12 collects the particles coming from the aspiration tube 10. Inside the lower element 12 of the collector member 11 there is a sensor (not illustrated) for indication of the amount of dust and/or particles that have been collected. The sensor will send a signal to an operating system running a computer system (not illustrated) governing the stripping device 1 and/or the cutting table 3, such that the user will know that the lower element 12 is about to get full, and that maintenance operations are needed. In other words, the sensor will be sending a signal to the computer system when the collector member 11 needs to be cleaned or emptied. The skilled person will appreciate that the dimensions of the top and lower elements 12, 13, as well as the materials of each of these elements, will not affect to the aspiration power of the ventilator 8.

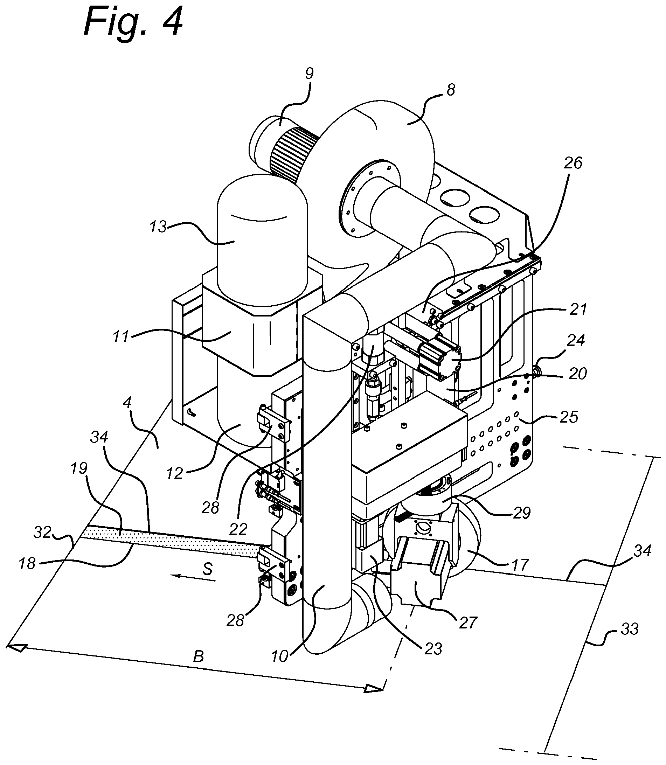

The stripping device 1 further comprises a cover element 15 having a hinge closure 16. The hinge closure 16 allows opening of the cover element 15 for maintenance operations or other type of operations. The cover element 15 houses a stripping member 17, which can be seen in figure 4. As shown, the stripping member 17 has a lower point being slightly lower than a lower circumference 30 of the cover element 15. The cover element 15 has a concave shape enclosing the volume, with the lower circumference 30 of the concave shape being provided at a vertical distance D from the upper surface 6 of the glass panel 4. The cover element 15 provides a vacuum chamber, within a stripping volume 31, for absorbing and removing all the parts of the plastic film layer 18 and/or the parts of the low emission layer 19 after the stripping member 17 has removed them. The cover element 15 encloses a stripping volume 31 between the cover element 15 and a stripping area of the upper surface 6. As it can be best seen in figure 2, the stripping member 17 is arranged inside the stripping volume 31 of the cover element 15.

The skilled person will appreciate that the plastic film layer 18 is a temporary protective film (TPF) having a full-coverage of the surface 6, 7 of the glass panel 4.The plastic film layer 18 is a low-adhesive recyclable film that protects the surface of the glass panel having the low emission layer from mechanical and/or chemical damage often experience during handling operations. The TPF is made of a suitable polymer material e.g. polyethylene.

Figure 3 shows a front view of the stripping device 1 according to the present invention wherein it can be clearly seen that the cover element 15 is connected to the aspiration tube 10 at a lower end of the tube. The cover element 15 comprises a pair of hinge closures 16 that should allow the user to open and replace the cover element 15 when necessary. Moreover, the stripping device 1 comprises a control system for moving the different elements of said device. The control system integrates a calibration system 21 for the cover element 15. This calibration system 21 comprises a clamping cylinder, a subsequent cylinder to control the height adjustment of the cover element 15, and a blocking element for adjustment position. When the height of the cover element 15 needs to be adjusted the calibration cylinder actuates to allow the cover element 15 to be adjusted in height. The adjustment in height of the cover element 15 is done until the cover element 15 reaches the blocking element. The blocking element is positioned at a predetermined height, which is defined by the user and controlled by the operating system run in the computer system. The height adjustment is manually performed by the user by means of manipulating a fastening means e.g. a screw, located in the blocking element itself. In this manner, the vertical distance D of the cover element relative to the surface 6, 7 of the glass panel 4 is determined. The calibration cylinder allows joint movement between the cover element 15 and the stripping member 17. It should be noted that the calibration cylinder can perform the movement of the cover element 15 and the stripping member 17, separately.

The vertical or height distance D will depend on many factors such as the thickness of the glass panel or the thickness of the plastic film layer as well as the aspiration properties of the ventilator 8. Preferably, the vertical distance D is about 0.1-2 cm, more preferably about 0.2-1 cm, and most preferably about 0.4-0.8 cm. In this manner, an optimal vacuum effect can be provided between the surface 6, 7 of the glass panel 4 and the interior surface of the cover element 15.

The stripping device 1 further comprises a calibration system 20 for the stripping member 17 which can be best seen in figure 4. The stripping device 1 also comprises a main supporting element 25 wherein the different parts and/or elements forming the device 1 are mounted. The supporting element 25 comprises a pair of connecting elements 24, that can be seen at the right hand side in of figure 3, extending from the side surface of the supporting element 25. These connecting elements 24 are provided to releasably hook the front cover plate 14 of the device 1.

As shown, a height adjustment system 22 for the scribing wheel 17 is mounted on a supporting plate 26. The supporting plate 26 is connected to the supporting element 25 and provides a fix and steady supporting point to the calibration and adjustment systems 20, 21, 22, allowing some distance between these calibration systems and the supporting element 25. In this manner, a support structure for the calibration systems is provided, which can be accessed for maintenance and/or reparations of any of parts of the calibration systems 20, 21, 22 in an easy manner, if the calibration systems 20, 21, 22 were mounted directly on the supporting element 25.

Figure 4 shows a perspective view of the stripping device 1 wherein the cover element 15 has been demounted and it is not shown, and wherein the stripping member 17 can be best seen. The stripping device 17 as shown is in the form of a grinding wheel 17, which is rotatably connected to a driving motor 27. The driving motor 27 provides rotational movement to the grinding wheel 17 in a parallel axis with respect to a stripping plane. Moreover, the grinding wheel 17 is connected to a bearing element 29 for moving the grinding wheel 17 around a perpendicular axis with respect to the stripping plane.

A transmission system 23, which is connected to the computer system, actuates the bearing element 29 that rotates the gridding wheel 17. The gridding wheel 17 is made of an abrasive material having a fine or ultra-fine grain size of at least 100 µm in grain diameter. Upon usage of the gridding wheel 17, the material is subject to some wear and tear, meaning this that the outer diameter of the gridding wheel is progressively decreasing. Initially, the gridding wheel 17 may have an outer diameter of at least 100 mm. Due to the continuous decrease of the outer diameter of the gridding wheel 17, calibration of the height positioning of the gridding wheel 17 is necessary. This calibration is done by lowering the gridding wheel 17 up to a level wherein its outer periphery is in contact with the surface 6, 7 of the glass panel 4.

As shown, the gridding wheel 17 is positioned at a distance B from a first end 32 of a predetermined linear stripping line 34. The predetermined linear stripping line 34 has a second end 33. This second end 33 is provided at a longer distance from the positioned of the grinding element 17, than the distance B. Nevertheless, for illustration proposes the distances between the gridding wheel 17 and the first and second ends 32, 33 appear to be about the same.

The operation of calibration of the gridding wheel 17 is done by firstly moving the stripping device 1 to a calibration area. The calibration area can be any position on top of the support surface 5 of the cutting table 3. Once the stripping device 1 is at the position within the calibration area, the calibration system 20 for the gridding wheel 17 will move the gridding wheel 17 along the vertical axis Y until the lower point of the gridding wheel 17 is in contact with the support surface 5 of the cutting table 3 in a first contact position. This first contact position is stored in a memory, such that when a glass panel 4 is positioned in a substantially horizontal position on the support surface 5, the user can enter the thickness of the glass panel 4, previously known by the user, such that the height adjustment system 22 can move the gridding wheel 17 to a height level where the lower point of the gridding wheel 17 contacts the surface 6, 7 of the glass panel 4.

As shown in figure 4, the supporting element 25 comprises a pair of clamping elements 26 at the opposite side of the connecting elements 24. These clamping elements 26 are configured to securely close the front cover plate 14 to the supporting element 25 and to cover and protect the different parts and elements of the stripping system 1 from becoming damaged.

The operation of the device according to the present invention will be explained here. During the operation of the stripping system 1, and after the calibration of the gridding wheel 17 and the cover element 15, the removing operation of the plastic film layer 18 and the low emission layer 19 on glass panel 4 can be safely and efficiently done. Firstly, the glass panel 4 is positioned in the support surface 5 of the cutting table 3. The glass panel 4 has been previously measured and this data has been stored in a memory of the computer system controlling the stripping device 1. The user will enter data concerning the number of intersections and predetermined linear stripping lines to be performed on the surface 6, 7 of the glass panel 4, in order to perform the stripping operation on the glass panel 4.

The skilled person will appreciate that, this detail explanation on the operation of the stripping device 1, is meant for a glass panels having a number of perpendicular intersections between predetermined linear stripping lines, otherwise indicated. Following, the positioning bridge 2 moves over the glass panel 4 along the axis X and Z. During this movement, the scribing wheel 17 is at a minimum vertical distance from the surface 6, 7 of the glass panel 4. In this manner, a substantial height adjustment prior to start the removing operation is avoided at a later stage of the stripping operation. Said distance is always at this stage a non-touching distance. Once the stripping device 1 is positioned at a predetermined starting point, the scribing wheel 17 is lowered up to a level wherein its lower point is in contact with the surface 6, 7 of the glass panel 4. In order to have a proper control of this movement and of the positioning of the scribing wheel 17, an analogue sensor (not illustrated) for accurate movement of the scribing wheel 17 is installed in the height adjustment system 22.

Simultaneously, the cover element 15 is positioned at a minimum height distance from the surface 6, 7 of the glass panel 4 such that friction between the cover element 15 and the glass panel is avoided. A starting point, wherein the stripping operation can be initiated, is located on a predetermined linear stripping line 34, and more precisely about 0-20 cm from a first end of the predetermined linear stripping line 34. Following, the scribing wheel 17 moves in a stripping direction S up to a location adjacent to the first end of the predetermined linear stripping line 34. In this manner, the scribing line 17 will have a layer of the removed plastic film layer 18 around its outer periphery, before the stripping operation continues. Next, the scribing wheel 17 is moved in an opposite direction to the stripping direction S along the predetermined linear stripping line 34 up to a distance adjacent to a second end of said line. This distance is about 0-2 cm from the second end of the predetermined linear stripping line 34.

It should be noted that when performing the stripping of the plastic film layer 18 and of the low emission layer 19, the cover element 15, which is entirely covering the scribing wheel 17, provides a strong vacuum effect for lifting the plastic film layer 18 and aspirating the plastic parts and the dust generated while performing the stripping operation. In this manner, the surface of the glass panel and of the support surface of the cutting table remains clean during the entire process.

It should be noted that the predetermined linear stripping line 34 is part of a number of linear stripping lines that comprise a limited number of intersections between each of these lines. The stripping operation is considered to have been finished when the second end of the predetermined linear scribing line is an intersection point with another predetermined linear stripping line or when the second end of the predetermined linear stripping line is at an edge of the glass panel 4. When the predetermined linear scribing line does not have any intersection point, the stripping operation is continuously performed until an intersection point wherein the removing operation has been already performed.

It should be noted that the arrangement to determine the right order of performing the removing operation on a glass panel, depends on firstly performing the removing operation of the plastic film layer and/or the low emission layer along one of the predetermined linear stripping line, and subsequently, the device searches on a saved and stored matrix, in the computer system, which is composed of a number of predetermined linear stripping lines, where there is the closest intersection point between two predetermined linear stripping lines, in order to start the removing operation again along a new predetermined linear stripping line. Preferably, the closest intersection should be the intersection of the last predetermined linear stripping line wherein the stripping operation has been lastly performed.

The removing operation is performed in a similar manner, when the form to be striped is a non-rectangular form e.g. a triangle, the intersections between predetermined stripping lines are considered to be non-tangential between them. In this case, the starting point to perform the removing operation will be a point in-between the first and the second end parts of the predetermined linear stripping lines.

Thus, the invention has been described by reference to the embodiments discussed above. It will be recognized that these embodiments are susceptible to various modifications and alternative forms well known to those of skill in the art without departing from the scope of the invention. Accordingly, although specific embodiments have been described, these are examples only and are not limiting upon the scope of the invention.

### Reference numerals

- 1.: Device/Stripping device
- 2.: Positioning bridge
- 3.: Cutting table
- 4.: Glass panel
- 5.: Supporting means/Support surface of the cutting table
- 6.: Upper surface of the glass panel
- 7.: Lower surface of the glass panel
- 8.: Ventilator
- 9.: Driving motor of the ventilator
- 10.: Aspiration tube
- 11.: Collector member
- 12.: Lower element of the collector member
- 13.: Top element of the collector member
- 14.: Front cover plate
- 15.: Cover element
- 16.: Hinge closure
- 17.: Stripping member/gridding wheel
- 18.: Plastic film layer
- 19.: Low emission layer
- 20.: Calibration system for the stripping element
- 21.: Calibration system for the cover element/Linear actuator
- 22.: Height adjustment system
- 23.: Transmission system
- 24.: Connecting member
- 25.: Supporting element
- 26.: Supporting plate
- 27.: Driving motor of the gridding wheel
- 28.: Clamping element
- 29.: Bearing element
- 30.: Lower circumference of the cover element
- 31.: Stripping volume
- 32.: First end of a predetermined linear stripping line
- 33.: Second end of a predetermined linear stripping line
- 34.: Linear stripping line

## Claims

1. A device for removing a plastic film layer and/or a low emission layer of a glass panel, comprising:
- supporting means (5) for supporting the glass panel (4) in a substantially horizontal orientation, wherein, when the glass panel (4) is positioned horizontally on the supporting means (5), the upper surface (6) is provided with the plastic film layer (18) and/or a low emission layer (19) to be stripped,
- a positioning bridge (2) having a horizontally extending positioning portion arranged at a vertical distance from the upper surface (6) of the glass panel (4) and the supporting means (5),
- a stripping device (1), arranged to move along the positioning portion in a horizontal direction, and over the upper surface (6) of the glass panel (4), comprising a stripping member (17) for stripping the plastic layer (18) and/or low emission layer (19) along the predetermined linear stripping line in a stripping direction S **characterized in that** the stripping device is configured to start stripping the plastic layer at a distance B from a first end (32) of the predetermined linear stripping line, wherein the distance B is greater than zero,
wherein the stripping device (1) comprises a cover element (15) enclosing a stripping volume (31) between the cover element (15) and a stripping area of the upper surface (6), the stripping member (17) being arranged inside the stripping volume (31), and an aspiration device (8, 9, 10, 11) for creating a vacuum effect within the stripping volume (31), such that the plastic film layer (18) detaches from the low emission layer (19), and for collecting particles stripped off the plastic film layer (18) and/or the low emission layer (19) by the stripping action of the stripping member (17).

2. The device according to claim 1, wherein the cover element (15) has a concave shape enclosing the volume, with a lower circumference (30) of the concave shape being provided at a vertical distance D from the upper surface (6) of the glass panel (4).

3. The device according to claim 2, wherein the vertical distance D is about 0.1-2 cm, preferably about 0.2-1 cm, and more preferably about 0.4-0.8 cm.

4. The device according to claim 2 or 3, wherein the vertical distance D can be adjusted by a linear actuator (21) connected to an upper end of the cover element (15).

5. The device according to any one of the preceding claims, wherein the aspiration device (8, 9, 10, 11) is provided with an aspiration tube (10) being fluidly connected to the stripping volume (31) for discharging the particles stripped off the plastic film layer (18) and/or the low emission layer (19).

6. The device according to claim 5, wherein the aspiration device (8, 9, 10, 11) comprises a collector member (11) being connected to the aspiration tube (10) for depositing the stripped-off particles of the plastic film layer (18) and/or the low emission layer (19).

7. The device according to claim 6, wherein the collector member (11) comprises a storage part (12) for collecting parts of the plastic film layer (18) and/or the low emission layer (19), and an air exhaust part (13) for exhausting air.

8. The device according to any one of the preceding claims, wherein the aspiration device (8, 9, 10, 11) comprises a centrifugal pressure fan or a pressure blower or a suction blower to create the vacuum effect inside the stripping volume.

9. The device according to any one of the preceding claims, wherein the stripping member (17) comprises a grinding wheel being rotatably arranged around a wheel rotation axis perpendicular to the stripping direction and parallel to the upper surface (6) of the glass panel (4).

10. The device according to claim 9, wherein the grinding wheel has an outer diameter of at least 100 mm, and a total thickness of about 10-50 mm.

11. The device according to claim 9 or 10, wherein the grinding wheel comprises an abrasive material having a fine or ultra-fine grain size of at least 100 µm in grain diameter.

12. A method for removing a plastic film layer and/or the low emission layer from a glass panel, using a device according to any of the claims 1- 11, the method being **characterized by** comprising the steps:
a) providing a glass panel (4) in a substantially horizontal orientation, such that it extends in a horizontal plane,
b) when seen in top view, moving a stripping device (1) to a distance B from a first end (32) of a predetermined linear stripping line, such that the stripping device (1) comprises a cover element (15) enclosing a stripping volume (31) between the cover element (15) and a stripping area of the upper surface (6) of the glass panel (4), and an aspiration device (8, 9, 10, 11) for creating a vacuum effect within the stripping volume (31), wherein the distance B is greater than zero
c) providing an aspiration device (8, 9, 10, 11) for creating a vacuum effect within the stripping volume (31) such that the plastic film layer (18) detaches from the low emission layer (19), and
d) collecting particles stripped off the plastic film layer (18) and/or the low emission layer (19) by the stripping action of the stripping member (17).

13. The method according to claim 12, wherein when performing steps c) and/or d) the stripping member (17) is stripping the plastic film layer (18) and/or the low emission layer (19) along a predetermined linear stripping line in a stripping direction S, up to a location adjacent to a first end (32) of a predetermined linear stripping line, and wherein the stripping member (17) is stripping the plastic film layer (18) in a direction opposite to the stripping direction S, along the predetermined linear stripping line up to a location adjacent to a second end (33) of the predetermined linear stripping line.

14. The method according to claim 12 or 13, wherein the distance B is less or equal to 20 cm.

15. The method according to any of the claims 12-14, wherein when performing the steps c) and/or d) cover element is at a vertical distance D from the upper surface (6) of the glass panel (4) of about 0.1-2 cm.

## Patentansprüche

1. Vorrichtung zum Entfernen einer Plastikfolienschicht und/oder einer Emissionsverringerungsfolie eines Glaspaneels, die Folgendes aufweist:
- Tragmittel (5) zum Tragen des Glaspaneels (4) in einer im Wesentlichen horizontalen Orientierung, wobei, wenn das Glaspaneel (4) horizontal auf den Tragmitteln (5) positioniert ist, die Oberseite (6) mit der Plastikfolienschicht (18) und/oder einer Emissionsverringerungsfolie (19) versehen ist, die abgetragen werden soll,
- eine Positionierungsbrücke (2) mit einem sich horizontal erstreckenden Positionierungsteil, der in einer vertikalen Distanz von der Oberseite (6) des Glaspaneels (4) und den Tragmitteln (5) angeordnet ist,
- einer Abtragungsvorrichtung (1), die so angeordnet ist, dass sie sich entlang des Positionierungsteils in einer horizontalen Richtung und über die Oberseite (6) des Glaspaneels (4) bewegt, welche ein Abtragungsglied (17) aufweist, um die Plastikschicht (18) und/oder die Emissionsverringerungsfolie (19) entlang der vorbestimmten linearen Abtragungslinie in einer Abtragungsrichtung S abzutragen, **dadurch gekennzeichnet, dass**
die Abtragungsvorrichtung konfiguriert ist, um das Abtragen der Plastikschicht in einer Distanz B von einem ersten Ende (32) der vorbestimmten linearen Abtragungslinie zu beginnen, wobei die Distanz B größer als Null ist,
wobei die Abtragungsvorrichtung (1) ein Abdeckungselement (15) aufweist, welches ein Abtragungsvolumen (31) zwischen dem Abdeckungselement (15) und einer Abtragungsfläche der Oberseite (6) umschließt, wobei das Abtragungsglied (17) in dem Abtragungsvolumen (31) angeordnet ist, und eine Ansaugvorrichtung (8, 9, 10, 11) zum Erzeugen eines Vakuumeffektes in dem Abtragungsvolumen (31), so dass die Plastikfolienschicht (18) sich von der Emissionsverringerungsfolie (19) löst, und zum Sammeln von Partikeln, die von der Plastikfolienschicht (18) und/oder der Emissionsverringerungsfolie (19) durch die Abtragungswirkung des Abtragungsgliedes (17) abgetragen wurden.

2. Vorrichtung nach Anspruch 1, wobei das Abdeckungselement (15) eine konkave Form hat, die das Volumen umschließt, wobei ein unterer Umfang (30) der konkaven Form an einer vertikalen Distanz D von der Oberseite (6) des Glaspaneels (4) vorgesehen ist.

3. Vorrichtung nach Anspruch 2, wobei die vertikale Distanz D ungefähr 0,1-2 cm, vorzugsweise ungefähr 0,2-1 cm und insbesondere vorzugsweise ungefähr 0,4-0,8 cm ist.

4. Vorrichtung nach Anspruch 2 oder 3, wobei die vertikale Distanz D durch eine Linearbetätigungsvorrichtung (21) eingestellt werden kann, die mit einem oberen Ende des Abdeckelementes (15) verbunden ist.

5. Vorrichtung nach einem der vorhergehenden Ansprüche, wobei die Ansaugvorrichtung (8, 9, 10, 11) mit einem Ansaugrohr (10) versehen ist, welches strömungsmittelmäßig mit dem Abtragungsvolumen (31) verbunden ist, um die Partikel auszugeben, welche von der Plastikfolienschicht (18) und/oder der Emissionsverringerungsfolie (19) abgetragen wurden.

6. Vorrichtung nach Anspruch 5, wobei die Ansaugvorrichtung (8, 9, 10, 11) ein Kollektor- bzw. Sammelglied (11) aufweist, welches mit dem Ansaugrohr (10) verbunden ist, um die abgetragenen Partikel der Plastikfolienschicht (18) und/oder der Emissionsverringerungsfolie (19) abzulegen bzw. zu entfernen.

7. Vorrichtung nach Anspruch 6, wobei das Sammelglied (11) einen Speicherteil (12) aufweist, um Teile der Plastikfolienschicht (18) und/oder der Emissionsverringerungsfolie (19) zu sammeln, und einen Luftausstoßteil (13) zum Ausstoßen von Luft.

8. Vorrichtung nach einem der vorhergehenden Ansprüche, wobei die Ansaugvorrichtung (8, 9, 10, 11) einen Zentrifugaldruckventilator oder ein Druckgebläse oder ein Ansauggebläse aufweist, um einen Vakuumeffekt in dem Abtragungsvolumen zu erzeugen.

9. Vorrichtung nach einem der vorhergehenden Ansprüche, wobei das Abtragungsglied (17) eine Schleifscheibe aufweist, die drehbar um eine Scheiben-drehachse angeordnet ist, die senkrecht zu der Abtragungsrichtung und parallel zu der Oberseite (6) des Glaspaneels (4) ist.

10. Vorrichtung nach Anspruch 9, wobei die Schleifscheibe einen Außendurchmesser von mindestens 100 mm und eine Gesamtdicke von ungefähr 10-50 mm hat.

11. Vorrichtung nach Anspruch 9 oder 10, wobei die Schleifscheibe ein abrasives Material aufweist, welches eine feine oder ultrafeine Korngröße von mindestens 100 µm im Korndurchmesser hat.

12. Verfahren zum Entfernen einer Plastikfolienschicht und/oder einer Emissionsverringerungsfolie von einem Glaspaneel unter Verwendung einer Vorrichtung nach einem der Ansprüche 1-11, wobei das Verfahren **dadurch gekennzeichnet ist, dass** es folgende Schritte aufweist:
a) Vorsehen eines Glaspaneels (4) in einer im Wesentlichen horizontalen Orientierung, so dass dieses sich in einer horizontalen Ebene erstreckt,
b) von oben gesehen, Bewegen einer Abtragungsvorrichtung (1) zu einer Distanz B von einem ersten Ende (32) einer vorbestimmten linearen Abtragungslinie, so dass die Abtragungsvorrichtung (1) ein Abdeckungselement (15) aufweist, welches ein Abtragungsvolumen (31) zwischen dem Abdeckungselement (15) und einer Abtragungsfläche der Oberseite (6) des Glaspaneels (4) umschließt, und einer Ansaugvorrichtung (8, 9, 10, 11) zum Erzeugen eines Vakuumeffektes in dem Abtragungsvolumen (31), wobei die Distanz B größer als Null ist,
c) Vorsehen einer Ansaugvorrichtung (8, 9, 10, 11) zum Erzeugen eines Vakuumeffektes innerhalb des Abtragungsvolumens (31), so dass die Plastikfolienschicht (18) sich von der Emissionsverringerungsfolie (19) löst und
d) Sammeln von Partikeln, die von der Plastikfolienschicht (18) und/oder der Emissionsverringerungsfolie (19) durch den Abtragungsvorgang des Abtragungsgliedes (17) abgetragen wurden.

13. Verfahren nach Anspruch 12, wobei, wenn die Schritte c) und/oder d) ausgeführt werden, das Abtragungsglied (17) die Plastikfolienschicht (18) und/oder die Emissionsverringerungsfolie (19) entlang einer vorbestimmten linearen Abtragungslinie in einer Abtragungsrichtung S abträgt, und zwar bis zu einer Stelle benachbart zu einem ersten Ende (32) einer vorbestimmten linearen Abtragungslinie, und wobei das Abtragungsglied (17) die Plastikfolienschicht (18) in einer Richtung entgegengesetzt zur Abtragungsrichtung S entlang der vorbestimmten linearen Abtragungslinie bis zu einer Stelle abträgt, die benachbart zu einem zweiten Ende (33) der vorbestimmten linearen Abtragungslinie ist.

14. Verfahren nach Anspruch 12 oder 13, wobei die Distanz B kleiner oder gleich 20 cm ist.

15. Verfahren nach einem der Ansprüche 12-14, wobei, wenn die Schritte c) und/oder d) ausgeführt werden, das Abdeckungselement bei einer vertikalen Distanz D von der Oberseite (6) des Glaspaneels (4) von ungefähr 0,1-2 cm ist.

## Revendications

1. Dispositif pour retirer une couche de film plastique et/ou un film à faible émission d'un panneau de verre, comprenant :
- des moyens de support (5) pour supporter le panneau de verre (4) dans une orientation sensiblement horizontale, dans lequel, lorsque le panneau de verre (4) est positionné horizontalement sur les moyens de support (5), la surface supérieure (6) est pourvue de la couche de film plastique (18) et/ou d'un film à faible émission (19) à retirer,
- un pont de positionnement (2) comportant une partie de positionnement s'étendant horizontalement agencée à une distance verticale de la surface supérieure (6) du panneau de verre (4) et des moyens de support (5),
- un dispositif de retrait (1), arrangé pour se déplacer le long de la partie de positionnement dans une direction horizontale, et sur la surface supérieure (6) du panneau de verre (4), comprenant un élément de retrait (17) pour retirer la couche de matière plastique (18) et/ou le film à faible émission (19) le long de la ligne de retrait linéaire prédéterminée dans une direction de retrait S, **caractérisé en ce que** le dispositif de retrait est configuré pour débuter le retrait de la couche de matière plastique à une distance B d'une première extrémité (32) de la ligne de retrait linéaire prédéterminée, dans lequel la distance B est supérieure à un zéro,
dans lequel le dispositif de retrait (1) comprend un élément de recouvrement (15) enfermant un volume de retrait (31) entre l'élément de recouvrement (15) et une zone de retrait de la surface supérieure (6), l'élément de retrait (17) étant agencé à l'intérieur du volume de retrait (31), et un dispositif d'aspiration (8, 9, 10, 11) pour créer un effet de vide dans le volume de retrait (31), de sorte que la couche de film plastique (18) se détache du film à faible émission (19), et pour collecter les particules retirées de la couche de film plastique (18) et/ou du film à faible émission (19) par l'action de retrait de l'élément de retrait (17).

2. Dispositif selon la revendication 1, dans lequel l'élément de recouvrement (15) a une forme concave enfermant le volume, une circonférence inférieure (30) de la forme concave étant prévue à une distance verticale D de la surface supérieure (6) du panneau de verre (4).

3. Dispositif selon la revendication 2, dans lequel la distance verticale D est d'environ 0,1 à 2 cm, de préférence d'environ 0,2 à 1 cm, et plus préférablement d'environ 0,4 à 0,8 cm.

4. Dispositif selon la revendication 2 ou 3, dans lequel la distance verticale D peut être ajustée par un actionneur linéaire (21) relié à une extrémité supérieure de l'élément de recouvrement (15).

5. Dispositif selon l'une quelconque des revendications précédentes, dans lequel le dispositif d'aspiration (8, 9, 10, 11) est pourvu d'un tube d'aspiration (10) relié fluidiquement au volume de retrait (31) pour décharger les particules retirées de la couche de film plastique (18) et/ou du film à faible émission (19).

6. Dispositif selon la revendication 5, dans lequel le dispositif d'aspiration (8, 9, 10, 11) comprend un élément collecteur (11) relié au tube d'aspiration (10) pour déposer les particules retirées de la couche de film plastique (18) et/ou du film à faible émission (19).

7. Dispositif selon la revendication 6, dans lequel l'élément collecteur (11) comprend une partie de stockage (12) pour collecter les parties de la couche de film plastique (18) et/ou du film à faible émission (19), et une partie d'évacuation d'air (13) pour évacuer l'air.

8. Dispositif selon l'une quelconque des revendications précédentes, dans lequel le dispositif d'aspiration (8, 9, 10, 11) comprend un ventilateur soufflant centrifuge ou un ventilateur soufflant ou un ventilateur d'aspiration pour créer l'effet de vide à l'intérieur du volume de retrait.

9. Dispositif selon l'une quelconque des revendications précédentes, dans lequel l'élément de retrait (17) comprend une meule agencée en rotation autour d'un axe de rotation de meule perpendiculaire à la direction de retrait et parallèle à la surface supérieure (6) du panneau de verre (4).

10. Dispositif selon la revendication 9, dans lequel la meule a un diamètre extérieur d'au moins 100 mm, et une épaisseur totale d'environ 10 à 50 mm.

11. Dispositif selon la revendication 9 ou 10, dans lequel la meule comprend un matériau abrasif ayant une taille de grain fine ou ultrafine avec un diamètre de grain d'au moins 100 µm.

12. Procédé pour retirer une couche de film plastique et/ou un film à faible émission d'un panneau de verre, en utilisant un dispositif selon l'une quelconque des revendications 1 à 11, le procédé étant **caractérisé en ce qu'**il comprend les étapes :
(a) de fourniture d'un panneau de verre (4) dans une orientation sensiblement horizontale, de sorte qu'il s'étende dans un plan horizontal,
(b) lorsqu'il est vu en vue de dessus, de déplacement d'un dispositif de retrait (1) à une distance B d'une première extrémité (32) d'une ligne de retrait linéaire prédéterminée, de sorte que le dispositif de retrait (1) comprenne un élément de recouvrement (15) enfermant un volume de retrait (31) entre l'élément de recouvrement (15) et une zone de retrait de la surface supérieure (6) du panneau de verre (4), et un dispositif d'aspiration (8, 9, 10, 11) pour créer un effet de vide dans le volume de retrait (31), dans lequel la distance B est supérieure à zéro,
(c) de fourniture d'un dispositif d'aspiration (8, 9, 10, 11) pour créer un effet de vide dans le volume de retrait (31) de sorte que la couche de film plastique (18) se détache du film à faible émission (19), et
(d) de collecte des particules retirées de la couche de film plastique (18) et/ou du film à faible émission (19) par l'action de retrait de l'élément de retrait (17).

13. Procédé selon la revendication 12, dans lequel, lors de l'exécution des étapes (c) et/ou (d), l'élément de retrait (17) retire la couche de film plastique (18) et/ou le film à faible émission (19) le long d'une ligne de retrait linéaire prédéterminée dans une direction de retrait S, jusqu'à un emplacement adjacent à une première extrémité (32) d'une ligne de retrait linéaire prédéterminée, et dans lequel l'élément de retrait (17) retire la couche de film plastique (18) dans une direction opposée à la direction de retrait S, le long de la ligne de retrait linéaire prédéterminée jusqu'à un emplacement adjacent à une deuxième extrémité (33) de la ligne de retrait linéaire prédéterminée.

14. Procédé selon la revendication 12 ou 13, dans lequel la distance B est inférieure ou égale à 20 cm.

15. Procédé selon l'une quelconque des revendications 12 à 14, dans lequel, lors de l'exécution des étapes (c) et/ou (d), l'élément de recouvrement est à une distance verticale D de la surface supérieure (6) du panneau de verre (4) d'environ 0,1 à 2 cm.
